# EUROPEAN PATENT APPLICATION

(11) **EP 2 226 276 A1**
(43) Date of publication of application: **08.09.2010**
(21) Application number: 09425086.7
(22) Date of filing: 05.03.2009
(51) Int. Cl.: B65G 47/14

(54) **Object orienting device**

(71) Applicant: Bonino S.p.A., 15100 Alessandria (IT)
(72) Inventor: Bonino, Giovanni, 15040 Valmadonna, Alessandria (IT)
(74) Representative: Leihkauf, Steffen Falk

(57) **Abstract**

An device to orient objects (2), comprising: a support structure (3), a sequence of orientation seats (5) for individual objects (2), a seat support (5) for the sequence of orientation seats (5), whereby the seat support (5) defines a movement path (6) of the objects (2); drive means both for the movement of the sequence of orientation seats (7) and for the selective orientation of seats (14), controlled by sensor means (12) to detect the object orientations.

## Description

The present invention generally relates to object orienting systems, and particularly to an orienting machine to arrange a plurality of objects having the same shape successively and with a predetermined orientation.

Such orienting systems are usually employed in production, processing, assembling, packaging lines, or the like, of industrial or consumer products in order to allow the feeding of components, pieces, products (hereinafter referred to as "objects") with the orientation required by the successive treatment or processing step.

In order to meet the needs of an automated industrial production, on one hand, the object orienting systems have to ensure a high orientation speed of the objects and, on the other hand, they have to be able to orient the objects not only in a first orientation direction (for example, the arrangement of the object with the upper side thereof facing upwardly) but also in a further second orientation direction (for example, the arrangement of the object with the front side thereof forward).

With reference to the example of dispenser plugs with an asymmetric shape for detergent containers or the like, it may be required that they are arranged successively with the dispenser head downwardly, and the suction pipette upwardly, and the trigger and the spraying nozzle towards the feeding direction of the sequence of plugs.

This requires an orientation of the individual plug in two orientation directions. A first orientation, so-called vertical orientation, which arranges an object given side upwardly, and a second orientation, so-called angular orientation, which arranges an object given side in the feeding direction of the sequence of objects.

By the known orienting systems, such orientation according to two orientation directions can be obtained only by means of two distinct orienting machines, in which a first vertical orienting machine performs the object first orientation, and a second angular orienting machine performs the second orientation, while also maintaining the object first orientation.

Vertical orienting machines are known, comprising a sequence of orientation seats moveable along a handling path, in which each orientation seat is adapted to receive one of such objects both in a desired vertical orientation and in a vertical orientation different from the desired one, respectively, a feeder conveying said objects in said orientation seats in an initial point of the handling path, a pressurized air ejecting blower directing a pressurized air jet against the objects received in the orientation seats so as to eject the objects with vertical orientation different from the desired one from the orientation seat, as well as transport means which withdraw, downstream the handling path, the objects with desired vertical orientation from the orientation seats.

Such known vertical orienting machines, usually manufactured as rotating machines with a circular crown forming such orientation seats (sometimes referred to as sectors), reach orienting speeds of about 300 objects per minute.

Furthermore, angular orienting machines are known, comprising a belt conveying mechanism to frictionally engage the sequence of objects coming from the vertical orienting machine and transport it to an angular orientation mechanism, while keeping the vertical orientation of each individual object. The angular orientation mechanism comprises a belt system frictionally engaging a given portion of each object in order to apply thereto a momentum which tends to rotate the object so as to angularly orient it, as well as a guide system allowing such rotation only in the case where the object is not yet in the desired angular orientation and only until reaching such desired angular orientation. Furthermore, on performing the angular orientation, the belt and guide mechanism has to maintain the vertical orientation of each object.

The belt and guide mechanisms require a very accurate calibration and several maintenance interventions, are sensible to even slight initial mispositioning events of the objects, and have very low orientation speeds.

Therefore, an aim of the present invention is to provide an object orienting device having such characteristics as to obviate the drawbacks cited with reference to the prior art.

In the scope of the general object, a particular object is to propose an object orienting device which allows carrying out a high speed orientation, particularly, but not limited to, relatively to multiple orientations.

This and other objects are achieved by an orienting device according to claim 1.

According to the invention, the orienting device comprises:

- a support structure;

- a sequence of orientation seats adapted to respectively receive an individual object in an individual orientation seat;

- a seat support connected to the support structure and supporting the sequence of orientation seats, said seat support defining a handling path of such objects;

- means for moving the sequence of orientation seats in a movement direction along the handling path,

in which the orienting device further comprises:

- sensor means which detect a feature indicative of the orientation of the objects received in the orientation seats relative to an orientation axis, and able to generate a control signal indicative of such orientation;

- orientation means so configured as to engage the orientation seats and selectively orient them so that all the objects received in such orientation seats take an expected orientation relative to the orientation axis and the movement direction of the sequence of orientation seats.

Due to the fact that the orientation means engage the seats (and not the object itself, as in the prior art), it is possible to perform a high speed orientation of objects, with a high degree of robustness and reliability, and to maintain a pre-orientation of the object even during the orientation.

Advantageous embodiments are the object of the dependant claims.

In order to better understand the invention, and appreciate the advantages thereof, some embodiments thereof will be described below by way of non-limiting example, with reference to the annexed Figures, in which:

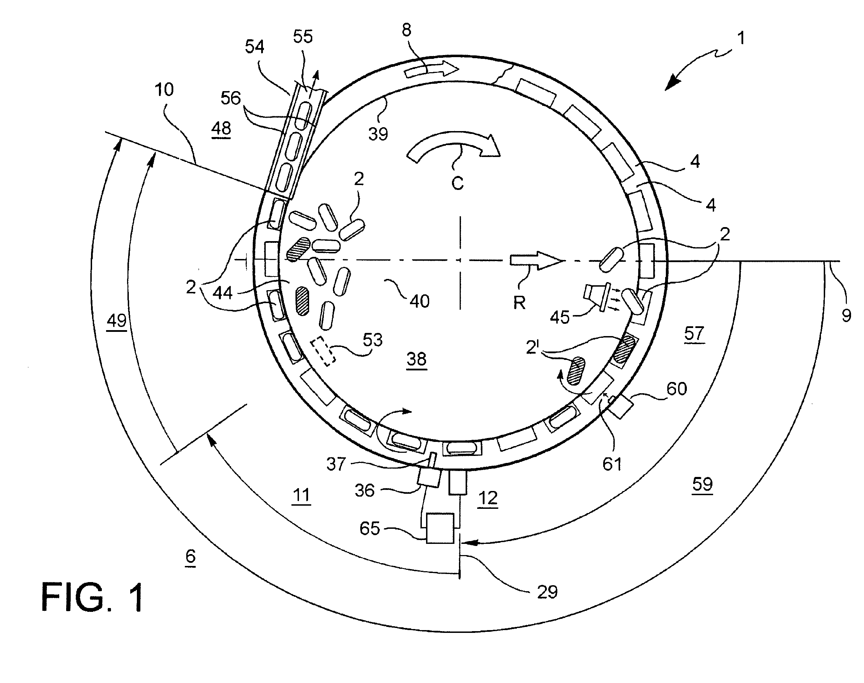

Fig. 1 is a top schematic view of an orienting device according to the invention;

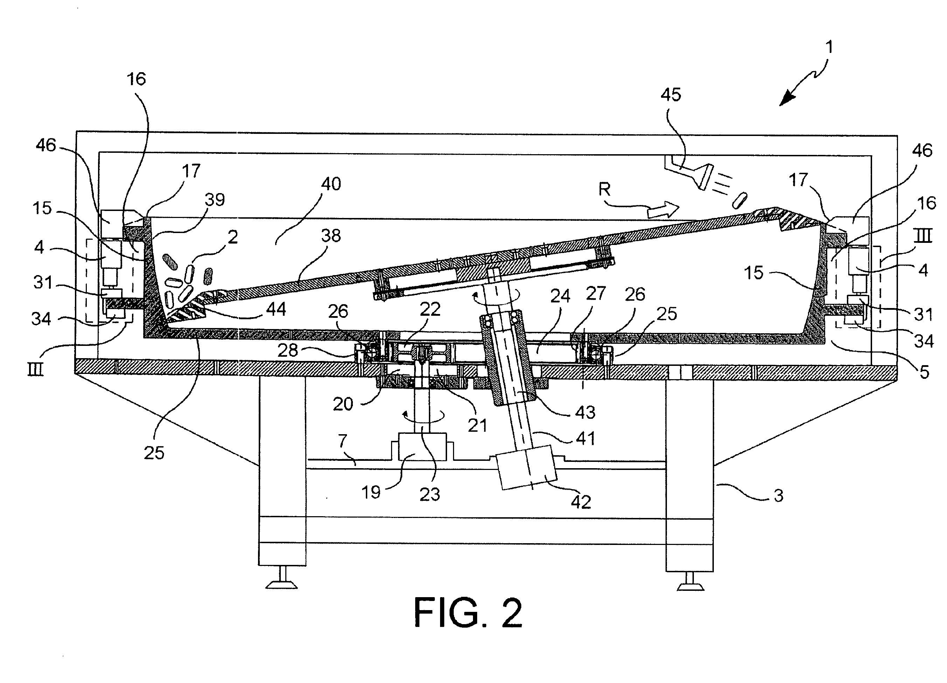

Fig. 2 is a sectional view according to the line II-II in Fig. 1,

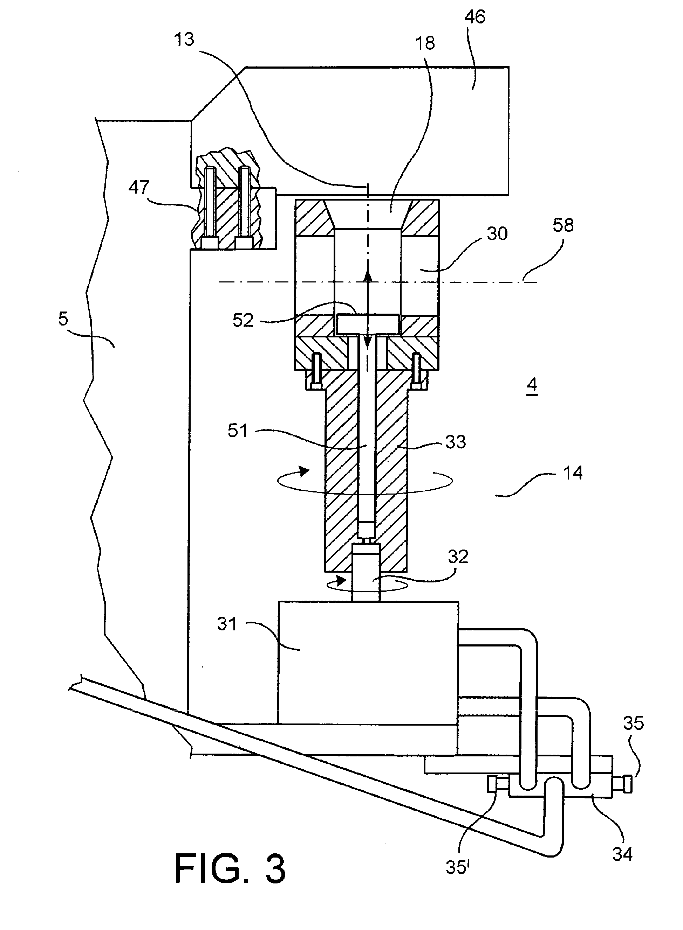

Fig. 3 is an enlarged view of the detail III in Fig. 2 in a first operative configuration;

Fig. 4 is a schematic view of an object with an orientation axis and a pre-orientation axis;

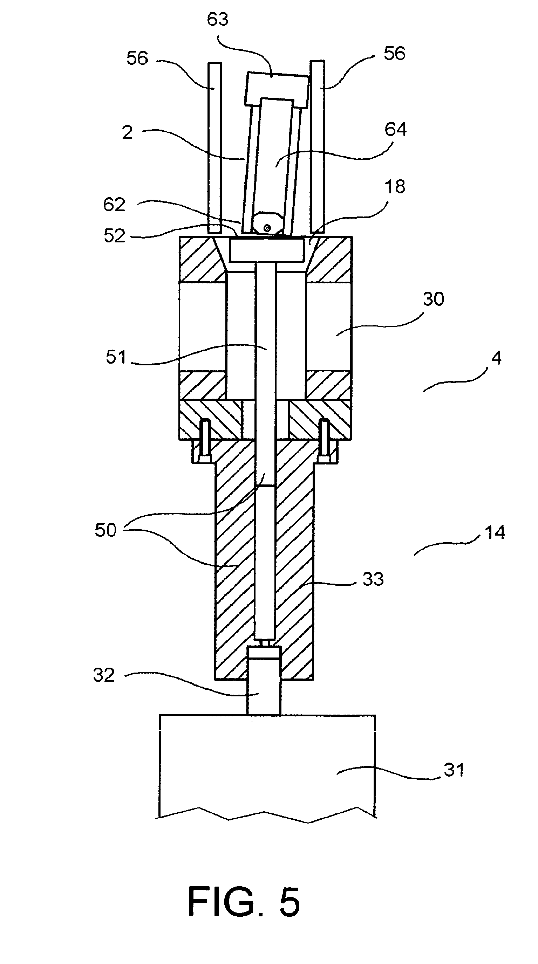

Fig. 5 is an enlarged view of the detail III in Fig. 2 in a second operative configuration.

With reference to the Figures, an orienting device 1 for the orientation of objects 2 comprises a support structure 3, a sequence of orientation seats 4 in which each individual orientation seat 4 is adapted to receive an individual object 2, a seat support 5 connected to the support structure 3 and supporting the sequence of orientation seats 4 in which such seat support 5 defines a movement path 6 of the objects 2, as well as means for the movement 7 of the sequence of orientation seats 4 in a moving direction 8 along the movement path 6. The movement path 6 is defined upstream by a feeding point 9 of the objects 2, downstream by a withdrawal point 10 of the objects 2, and comprises an orientation length 11, arranged downstream the feeding point 9 relative to the moving direction 8.

The orienting device 1 further comprises sensor means 12 which detect a feature indicative of the orientation of the objects 2 received in the orientation seats 4 relative to an orientation axis 13, and able to generate a control signal indicative of such orientation, as well as orientation means 14 so configured as to engage the orientation seats 4 and selectively orient them so that all the objects 2 received in the orientation seats 4 take an expected orientation relative to the orientation axis 13 and the movement direction 8 of the sequence of orientation seats 4, relative to the movement path 6.

In accordance with an embodiment, the seat support 5 is configured as a support ring 5, comprising a circumferential wall 15, with a radially outer surface 16, and an upper edge 17, in which the orientation seats 4 are connected to the circumferential wall 15 and arranged adjacent to the radially outer surface 16 thereof, and having an access opening 18 under or flush with the upper edge 17.

In accordance with an embodiment, the movement means 7 of the sequence of orientation seats 4 comprise a motor 19, for example, a pneumatic or electric motor, connected to the support structure 3 (for example, a steel or aluminium frame), and motion transmission means 20 from the motor 19 to the seat support 5. Advantageously, the transmission means 20 comprise a gear 21, with a pinion 22, splined on a drive shaft 23 of the motor 19, meshing with an internally toothed crown 24, integrally connected, for example, by means of screws, to a bottom 25 of the seat support 5, which connects to a lower edge of the circumferential wall 15. In this manner, the rotational motion of the drive shaft 23 is demultiplied and transmitted to the seat support 5.

According to an embodiment, an annular bearing 26 for the rotating support of the seat support 5 is provided, comprising an inner ring 27 splined on the crown 24 and an outer ring 28 screwed to the frame 3.

The sensor means 12 can be configured, for example, as optical or mechanical sensors. In accordance with an embodiment, the sensor means 12 comprise an optical detector, for example, one or more photocells, or one or more cameras, so configured as to detect the presence of a marker or a shape or surface feature of the object 2 received in the orientation seat 4. In accordance with a further embodiment, the sensor means 12 comprise mechanical feelers.

In accordance with an embodiment, the sensor means 12 comprise a single detector or a detector assembly (the shape characteristics of an object 2 can, in some cases, require the cooperation of multiple detectors to generate the signal indicative of the orientation of the object 2 within the orientation seat 4) arranged in the proximity of only one detection point 29 along the handling path 6 and connected to the support structure 3 or mounted independently from the orienting device 1 (for example, on a self-standing sensor support, in turn secured on the floor of a shed), while still being aligned with the above-mentioned detection position 29 of the handling path 6.

Alternatively, it is possible to provide for a plurality of sensor means 12 connected to the seat support 5, particularly to the circumferential wall 15, or directly to each orientation seat 4, so as to form a functional assembly comprising the orientation seat 4 and the sensor means 12.

The sensor means 12 can be connected to a control unit 65, so configured as to drive the orientation means 13 as a function of the control signal and a pre-established orientation program. According to an embodiment, the above-mentioned control unit 65 can be configured as a local control unit, or part of a central control unit of the orienting device 1, preferably programmable, and provided with a user interface in order to be capable of setting the orientation program, according to the type of object 2 and orientation (for example, a selective orientation of the objects 2 could be desirable so that, in relation to the sequence of objects 2, they take an alternative orientation).

In order to allow the sensor 12 to detect a shape or surface characteristic of the object 2 which is received in the seat 4, the same seat 4 can comprise detection windows 30, for example, obtained in the seat 4 walls, having various shapes and dimensions (for example, one or more extended windows 30 obtained centrally in the wider side walls, or one or more groups of notches put successively side-by-side).

According to an aspect of the invention, the orientation means 14 comprise a motor 31, for example, a pneumatic or electric motor, cooperating with the orientation seat 4 to selectively orient it as a function of the orientation of the object 2, which is detected by the sensor 12.

According to an embodiment, the orientation means 14 comprise a plurality of motors 31, preferably pneumatic ones, each being respectively associated to a seat 4, connected to the seat support 5, and having a drive shaft 32 connected to the seat 4 through a drive shaft 33. Each pneumatic motor 31 is supplied via the interposition of a pneumatic control valve 34, also connected to the seat support 5, bearing small levers or push-buttons (35, 35'), and in turn actuatable by an actuator 36, connected to the support structure 3, for example, a cylinder-piston assembly 36 or a linear actuator generally with a small piston 37 which is moveable between an activation position, in which it meets the trajectory, which is defined by small levers (35, 35') or push-buttons of the pneumatic valve 34, in the movement thereof integral to the seat support 5 movement in the movement direction 8, and a rest position outside the above-mentioned trajectory. Particularly, in the activation position, the piston 37 is able to contact and activate the pneumatic valve 34 levers (35, 35'), which controls the triggering, energizing and stop of the above-mentioned motor 31 during the orientation of the object 2.

According to the embodiment hereto described, therefore, the orientation of an object 2 occurs by means of a rotation of the seat 4 containing the object 2 around the orientation axis 13. However, the present invention also contemplates the hypothesis of a translatory or mixed orientation movement, relative to the movement path 6, in order to achieve the desired orientation of the object 2.

According to an embodiment, the orientation seats 4 are removably connected to the orienting device 1 (for example, by means of screws), so as to make the replacement of the orientation seats 4 possible, in order to be able to adapt the orienting device 1 to objects 2 with variable shape and dimensions.

According to an aspect of the invention, the orientation means 14 are removably connected to the seat support 5, for example, through a screwed connection.

In accordance with an alternative embodiment, the orientation means 14 comprise one only orientation assembly, which is preferably stationary, adapted to engage each orientation seat 4, one after the other, in an intermittent manner.

In order to feed the objects 2 to the handling path 6, a feeder 38 is provided, for example, a rotating plate 38 which is radially arranged within the support ring 5 and the handling path 6, and so configured as to form, together with a radially inner guide surface 39 of the circumferential wall 15, a collecting space 40 to receive the loose objects 2 to be oriented. The rotating plate 38 is connected to a shaft 41 of a feeder motor 42 secured to the support structure 3, and adapted to rotate the rotating plate 38, so that the loose objects 2 received on the rotating plate 38, in the collecting space 40, are radially dragged (arrow R) outwardly against the guide surface 39, and in the circumferential direction (arrow C) towards the movement path 6 feeding point 9, where the individual objects 2 fall in the seats 4. To this aim, the rotating plate 38 is preferably inclined, and rotates about a rotational axis 43 inclined relative to the plane of the movement path 6 (or, in other words, relative to the support ring 5 rotational axis) such as to define a lowermost point (bottom 44 of the collecting space), and an uppermost point at the same height of the upper edge 17 and coincident with the movement path 6 feeding point 9.

Furthermore, a pneumatic blower 45 can be provided for (also referred to as pneumatic comb 45) connected to the support structure 3, and so configured as to push the objects 2 in the seats 4, as well as a plurality of guide walls 46, removably connected to the seat support 5 and arranged above the seats 4 access openings 18, and adapted to guide the objects 2 into the seats 4 during the conveyance thereof.

According to an aspect of the invention, such guide walls 46 are connected to the seat support 5 through a removable connection 47 (for example, screws), so as to be able to replace the guide walls 46 in the case of the use of the orienting device 1 with objects 2 having variable shape and dimensions. Advantageously, a plurality of guide walls 46 are joined to form guide sectors for a quicker and easier replacement and assembling.

According to an embodiment, the orienting device 1 comprises withdrawing means 48, adapted to withdraw the oriented objects 2 from the seats 4, when they are in a withdrawing length 49 of the handling path 6, arranged downstream the orientation length 11 and upstream the withdrawal point 10, and to move them away from the device 1 in the handling path 6 withdrawal point 10.

According to a further embodiment, the withdrawing means 48 comprise a plurality of pneumatic cylinder-piston assemblies 50, in which each of the above-mentioned assemblies 50 is associated to a seat 4 and a motor 31, and having a lifting piston 51 with an object rest plane 52 which is moveable between an activation position, in which the rest plane 52 is flush or above the access opening 18, and a rest position, in which the rest plane 52 is on the bottom (or near the bottom) of the seat 4. Advantageously, each assembly 50 is preferably supplied from the same pneumatic valve 34 of the pneumatic motor 31. Preferably, the cylinder-piston assembly 50 constitutes at the same time the drive shaft 33 between the drive shaft 32 and the seat 4. At the beginning of the withdrawing length 49, means are provided, for example, such as a control cam 53, which is connected to the support structure 2, such as to actuate the pneumatic valve 34 to lift the objects 2.

In order to remove the objects 2 from the orienting device 1, a conveyor 54 can be provided, for example, comprising a conveyor belt 55 constituting the bottom of the conveyor 54, and guide walls 56, so conformed as to preserve the orientation of the objects 2 previously oriented during the withdrawal thereof from the orienting device 1.

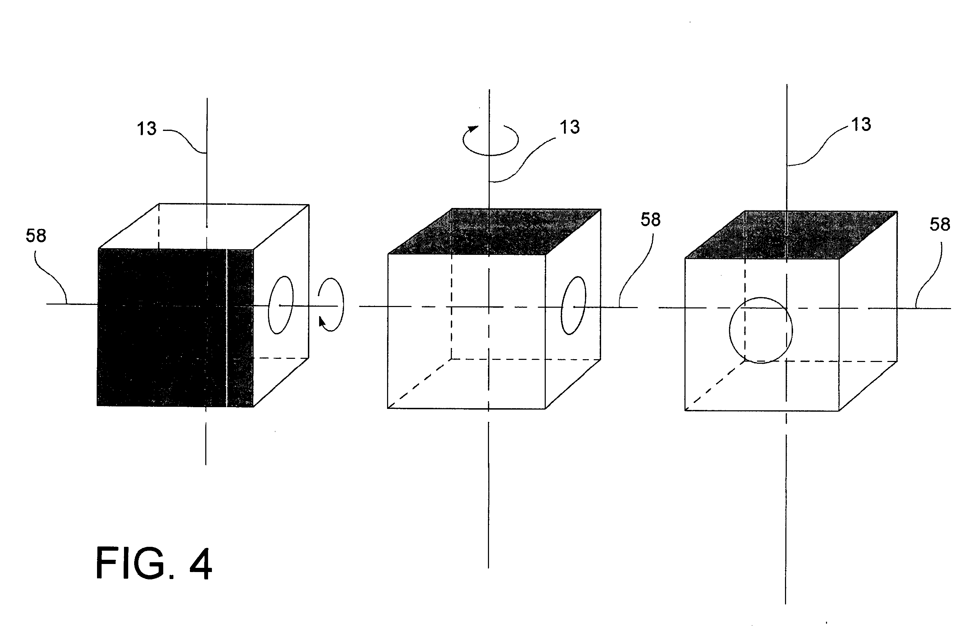

According to a preferred embodiment, the orienting device 1 further comprises pre-orientation means 57, so that the same orienting device 1 can perform a multiple orientation of the objects 2, in the given case, a double orientation, i.e. a pre-orientation relative to a pre-orientation axis 58 (for example, an angular pre-orientation about a horizontal axis 58, that is a head-foot pre-orientation) and the successive orientation relative to the orientation axis 13 (for example, an angular orientation about a vertical axis 13), while maintaining also the pre-orientation (see, for example, Fig. 4).

Such pre-orientation is carried out along a pre-orientation length 59 of the movement path 6, extending between the feeding point 9 and the detection point 29, upstream the orientation length 11.

Such pre-orientation means 57 comprise one or more pressurized air ejection blowers 60, connected in a stationary manner to the support structure 3 or the seat support 5, and so configured as to eject the objects 2 from the seats 3 with a different pre-orientation relative to the desired pre-orientation.

To this aim, the walls of the seats 4 have access windows 30 adapted to allow the access of the pressurized ejecting air jet 61 to the objects 2 (in a preferred embodiment, the access windows 30 match with the detection windows 30), and have such a shape so that the pressurized air jet 61 only ejects the objects 2 with a different pre-orientation relative to the desired one.

The operation of the object orienting device 1 will be described herein below, with reference to the particular case of the dispenser plugs.

In use, both the rotating plate 38 and the seat support 5 are put into rotation by the respective motors (19, 41).

The loose plugs 2, received in the bottom 44 of the collecting space 40, are radially pushed outwardly against the guide surface 39 and, therealong, they rise towards the feeding point 9, where they reach the circumferential wall 15 upper edge 17. The guide walls 46, which move integrally to the seat support 5 in the movement direction 8, guide the plugs 2 one after another towards the orientation seats 4, so that only one plug 2 is guided towards a seat 4. The plug 2, which is flush or slightly above the access opening 18, enters the seat 4, being facilitated in this operation by the pneumatic comb 45.

In the specific case, the seats 4 are conformed so that the plugs 2 can be received therein, relatively to the horizontal pre-orientation axis 58, or with their head 62 downwardly and the plug bottom 63 upwardly (taken as the desired pre-orientation), or with the head 62 upwardly and the plug bottom 63 downwardly.

Upon advancing along the pre-orientation length 59, the plugs 2 get in the proximity of the ejecting blower 60, which ejects the plugs 2' having the undesired pre-orientation from the seats 4, which will be received again in the collecting space 40. Therefore, downstream the ejecting blower 60, some of the seats 4 will result to be empty, while the other ones will contain only those plugs 2 having the desired pre-orientation.

Further downstream, at the detection point 29, the sensor means 12 detect the orientation of the plugs 2, which, relatively to the vertical orientation axis 13, can be oriented either with the trigger 64 facing an opposite direction relative to the movement direction 8 (taken as the desired orientation), or with the trigger 64 facing the movement direction 8.

According to the detected orientation, the sensor means 12 generate a corresponding control signal. If the orientation of the plug 2 is the desired one, then the generated control signal causes the positioning of the linear actuator 36 (small piston 37) to the rest position, avoiding the actuation of the motor 31, thereby maintaining the desired orientation of the plug 2.

If the plug 2 orientation is not the desired one, the control signal causes the positioning of the small piston 37 to the activation position, so that the small piston 37 engages the small lever 35 of the pneumatic valve 34, thus causing the motor 31 activation, the seat 4 rotation, and then bringing the plug 2 to the desired orientation.

In this manner, at the end of the orientation length 11, some of the seats 4 will result to be empty, while the other ones will receive only those plugs 2 having both the orientation and the desired pre-orientation.

Further downstream, at the beginning of the withdrawing length 49, the cam 53, integral to the support structure 3, engages the small lever 35' during the passage of the pneumatic valve 34 in the handling direction 8, thus causing the lifting of each piston 51 from the rest position to the activation position, thereby lifting each plug 2 off the seat 4.

When the plugs 2, as they proceed in the movement direction 8, get to the withdrawal point 10, they are arranged outside the seat 4. Here, they are withdrawn by the conveyor belt 55 and guided by the guide walls 56, so as to maintain both the orientation and the pre-orientation which had been previously acquired.

The invention is advantageously implementable in several machines for the processing of objects of industrial interest such as, for example, plastic moulded workpieces, metallic objects, products of plant origin, or foods.

The invention involves several advantages.

First, the orienting device 1 according to the invention allows achieving high orientation speeds.

Furthermore, the orienting device 1 carries out the orientation without the risk of damaging the objects, since the objects are never directly grasped or handled, but the handling and orientation operations occur via the interposition of the orientation seats 4 in which they are received.

The orienting device 1 provides a single device to carry out a multiple orientation (for example, comprising a pre-orientation and a successive orientation), thereby allowing a saving in terms of resources (machinery).

Finally, the invention provides an orienting device 1 which does not require calibration and maintenance interventions, therefore allowing optimizing the machine time.

It shall be apparent that to the orienting device 1 according to the present invention, those skilled in the art, to the aim of meeting contingent, specific needs, will be able to make further modifications and variations, all of which being anyhow within the protection scope of the invention, as defined by the following claims.

## Claims

1. An orienting device (1) for the orientation of objects (2), comprising:
- a support structure (3);
- a sequence of orientation seats (4), in which each individual orientation seat (4) is adapted to receive an individual object (2);
- a seat support (5) connected to the support structure (3) and supporting the sequence of orientation seats (4), in which said seat support (5) defines a movement path (6) of the objects (2);
- means (7) for the movement of the sequence of orientation seats (4) in a movement direction (8) along the movement path (6);
**characterized in that** it comprises sensor means (12) which detect a feature indicative of an orientation of the objects (2) received in said orientation seats (4) relative to an orientation axis (13) and adapted to generate a control signal indicative of said orientation, as well as orientation means (14) so configured as to engage the orientation seats (4) and selectively orient them so that all the objects (2) received in the orientation seats (4) take an expected orientation relative to the orientation axis (13) and the movement direction (8).

2. The orienting device (1) according to claim 1, wherein the seat support (5) comprises a circumferential wall (15) having a radially outer surface (16) and an upper edge (17), wherein said orientation seats (4) are connected to the circumferential wall (15) and arranged adjacent to said outer surface (16) and define an access opening (18) to receive said objects (2), said access opening (18) being arranged under or flush with the upper edge (17).

3. The orienting device (1) according to claim 1 or 2,
wherein said handling means (7) comprise a pneumatic motor (19) connected to the support structure (3), and means (20) for the motion transmission from the motor (19) to the seat support (5).

4. The orienting device (1) according to any one of the preceding claims, wherein the sensor means (12) comprise an optical detector so configured as to detect a shape or surface characteristic of the object (2) received in the orientation seat (4).

5. The orienting device (1) according to any one of the preceding claims, wherein the sensor means (12) comprise a single detector associated to only one detection point (29) along the movement path (6).

6. The orienting device (1) according to any one of the preceding claims, wherein the sensor means (12) comprise a plurality of detectors, each connected to one of said orientation seats (4), respectively, so as to form preassembled and preset seat-detector assemblies.

7. The orienting device (1) according to any one of the preceding claims, wherein said orientation seats (4) comprise at least one detection window (30) obtained in an orientation seat (4) wall, and adapted to allow the exposure of the object (2) to the sensor means (12).

8. The orienting device (1) according to any one of the preceding claims, wherein the sensor means (12) are in signalling connection with a control unit (65), which is so configured as to drive the orientation means (13) as a function of the control signal and a pre-established orientation program.

9. The orienting device (1) according to claim 8, wherein said control unit (65) is programmable to adapt said orientation program to a desired orientation pattern.

10. The orienting device (1) according to any one of the preceding claims, wherein said orientation means (14) comprise a plurality of motors (31), each respectively associated to one of said orientation seats (4) and connected to the seat support (5).

11. The orienting device (1) according to claim 10,
wherein each motor (31) comprises a pneumatic motor supplied via the interposition of a pneumatic control valve (34) connected to the seat support (5) and actuatable by an actuator (36) connected to the support structure (3) and driven on the basis of the control signal of the sensor means (12).

12. The orienting device (1) according to any one of the preceding claims, wherein said orientation seats (4) are removably connected to the orienting device (1), such as to allow the replacement thereof.

13. The orienting device (1) according to any one of the preceding claims, comprising a feeder (38) having a rotating plate (38) radially arranged within the seat support (5) and the movement path (6), and so configured as to form, together with a guide surface (39) of the seat support (5), a collecting space (40) to receive said loose objects (2) to be oriented,
wherein said rotating plate (38) is rotationally actuatable, so that the loose objects (2) received in the collecting space (40) are radially dragged outwardly against the guide surface (39) and along said guide surface (39) towards a feeding point (9) of the movement path (6), in which the individual objects (2) enter the orientation seats (4).

14. The orienting device (1) according to any one of the preceding claims, comprising withdrawing means (48), adapted to withdraw the oriented objects (2) from the orientation seats (4) and to cooperate with a conveyor (54) to remove the objects (2) oriented by the orienting device (1).

15. The orienting device (1) according to any one of the preceding claims, comprising means (57) for a pre-orientation of the object (2) relative to a pre-orientation axis (58), wherein said pre-orientation means (57) comprise one or more ejection devices (60) so configured as to eject the objects (2) with a different pre-orientation relative to a desired pre-orientation from the orientation seats (4), along a pre-orientation length (59) of said movement path (6) upstream the detection point (29).
